# EUROPÄISCHE PATENTSCHRIFT

(11) **EP 2 205 460 B1**
(45) Veröffentlichungstag und Bekanntmachung des Hinweises auf die Patenterteilung: **30.03.2016**
(21) Anmeldenummer: 08845833.6
(22) Anmeldetag: 29.10.2008
(51) Int. Cl.: B60N 2/66, B60N 2/44, A47C 7/46

(54) **VERSTELLVORRICHTUNG**
ADJUSTING DEVICE
DISPOSITIF DE RÉGLAGE

(30) Priorität: 31.10.2007 DE 102007051999
(43) Veröffentlichungstag der Anmeldung: 14.07.2010
(73) Patentinhaber: L&P Swiss Holding Company, 9303 Wittenbach (CH)
(72) Erfinder: OCH, Roland, 97228 Rottendorf (DE); STEGER, Werner, 91355 Hiltpoltstein (DE)
(74) Vertreter: Sticht, Andreas
(86) Internationale Anmeldenummer: PCT/EP2008/009151
(87) Internationale Veröffentlichungsnummer: WO 2009/056304

(56) Entgegenhaltungen:
- DE-A1- 3 735 428
- DE-A1-102005 038 743
- US-A- 5 902 011

## Beschreibung

Die vorliegende Erfindung betrifft eine Verstellvorrichtung für einen Sitz, insbesondere eine Verstellvorrichtung zur Einstellung einer Wölbung einer Rückenlehne oder an der Fläche eines Sitzes.

Derartige Verstellvorrichtungen sind beispielsweise aus der EP 04 85 483 B1 bekannt. Zudem ist eine Verstellvorrichtung nach dem Oberbegriff des Anspruchs 1 aus US 5,902,011A bekannt.

Bei den aus der EP 04 85 483 B1 bekannten Verstellvorrichtungen wird die Wölbung eines wölbbaren Elements, beispielsweise einer Platte, mit einer mechanischen Verstellvorrichtung, welche beispielsweise Bowdenzüge umfassen kann, verstellt.

Bei einer Weiterentwicklung derartiger Verstellvorrichtungen ist auch eine Verstellung des Scheitelpunktes der Wölbung in vertikaler Richtung der Rückenlehne möglich.

Derartige rein mechanische Verstellvorrichtungen sind teilweise von ihrer Konstruktion her relativ aufwänding und somit in der Herstellung relativ teuer.

Auf der anderen Seite sind Verstellvorrichtungen bekannt, bei welchen ein in einem Sitz eingebauter Gassack aufgeblasen wird. Durch einen derartigen Gassack wird jedoch eine undefinierte Druckverteilung hervorgerufen, und der Sitzkomfort ist verlglichen mit mechanischen Lösungen eingeschränkt.

Es ist daher eine Aufgabe der vorliegenden Erfindung, eine Verstellvorrichtung bereitzustellen, welche einen einfachen Aufbau mit einem hohen Komfort verbindet.

Diese Aufgabe wird gelöst durch eine Verstellvorrichtung gemäß Anspruch 1. Die abhängigen Ansprüche definieren weitere Ausführungsbeispiele der Verstellvorrichtung sowie einen die Verstellvorrichtung umfassenden Sitz.

Erfindungsgemäß wird eine Verstellvorrichtung bereitgestellt, welche ein wölbbares Element mit einer ersten einem Insassen eines Sitzes zugewandten Seite, wenn die Verstellvorrichtung in einem Sitz installiert ist, und einer der zweiten Seite gegenüberliegenden ersten Seite, ein an der zweiten Seite des wölbbaren Elements angeordneten pneumatischen Wölbelement, zumindest ein Führungselement zum Führen des pneumatischen Wölbelements in einer longitudinalen Richtung des wölbbaren Elements und ein Kopplungselement zum Koppeln des pneumatischen Wölbelements mit dem mindestens einen Führungselement umfasst. Das wölbbare Element umfasst longitudinale und transversale Streben und ist zur Anbringung an einer Rahmenstruktur ausgestaltet, so dass das wölbbare Element stationär bleibt, wenn das pneumatische Wölbelement in der longitudinalen Richtung des wölbbaren Elements bewegt wird

Durch das wölbbare Element kann der Druck des pneumatischen Wölbelements, welches beispielsweise einen Gassack umfassen kann, gleichmäßig zu einem Insassen hin verteilt, was den Komfort erhöht. Zudem kann durch das Führungselement und das Kopplungselement das pneumatische Wölbelement in longitudinaler Richtung des wölbbaren Elements verfahren werden, womit ein Scheitelpunkt der Wölbung des wölbbaren Elements verstellt werden kann.

Die Verstellvorrichtung kann weiterhin ein Abdeckelement umfassen, welches zwischen dem wölbbaren Element und dem pneumatischen Element angeordnet ist und zusammen mit dem pneumatischen Wölbelement in der longitudinalen Richtung des wölbbaren Elements beweglich ist. Hierdurch wird das pneumatische Wölbelement gegen Beschädigung durch Entlangbewegen an dem wölbbaren Element geschützt, und ein Kraftaufwand zum Bewegen des pneumatischen Wölbelements in der longitudinalen Richtung kann verringert werden.

Das pneumatische Wölbelement kann beispielsweise mittels einer elektrischen oder manuellen Pumpe verstellt werden. Das wölbbare Element kann beispielsweise eine Platte oder eine Konstruktion mit Längs- und Querstreben umfassen.

Das Kopplungselement kann als Platte ausgebildet sein, gegen welche sich das pneumatische Wölbelement abstützt.

Das Verstellelement kann weiterhin eine Antriebseinheit zum Antreiben des pneumatischen Wölbelements in der longitudinalen Richtung des wölbbaren Elements, beispielsweise durch Bewegen des Kopplungselements, umfassen. Die Kraftübertragung kann beispielsweise durch Drähte, insbesondere durch Drähte von Bowdenzügen, erfolgen.

Die vorliegende Erfindung wird nachfolgend unter Bezugnahme auf die beigefügte Zeichnung anhand von Ausführungsbeispielen näher erläutert. Es zeigen:
Figur 1 ein Ausführungsbeispiel einer erfindungsgemäßen Verstellvorrichtung in einem teilweise zusammengebauten Zustand,
Figur 2 das Ausführungsbeispiel von Figur 8, wobei zusätzliche Komponenten hinzugefügt wurden,
Figur 3 eine vergrößerte Teilansicht von Figur 2,
Figur 4 das Ausführungsbeispiel von Figur 2, wobei weitere Komponenten hinzugefügt wurden,
Figur 5 eine teilweise Seitenansicht des Ausführungsbeispiels von Figur 1 in einem vollständig zusammengebauten Zustand, wobei ein pneumatisches Wölbelement nicht aufgeblasen ist,
Figur 6 eine Ansicht entsprechend Figur 5, wobei das pneumatische Wölbelement aufgeblasen ist,
Figur 7 eine Perspektivansicht des vollständig zusammengebauten Ausführungsbeispiels der Figuren 1-6,
Figur 8 eine Rückansicht des vollständig zusammengebauten Ausführungsbeispiels der Figuren 1-7,
Figur 9 eine Rückansicht eines weiteren Ausführungsbeispiels einer erfindungsgemäßen Verstellvorrichtung im vollständig zusammengebauten Zustand, und
Figur 10 eine Frontansicht des Ausführungsbeispiels von Figur 9 im teilweise zusammengebauten Zustand.

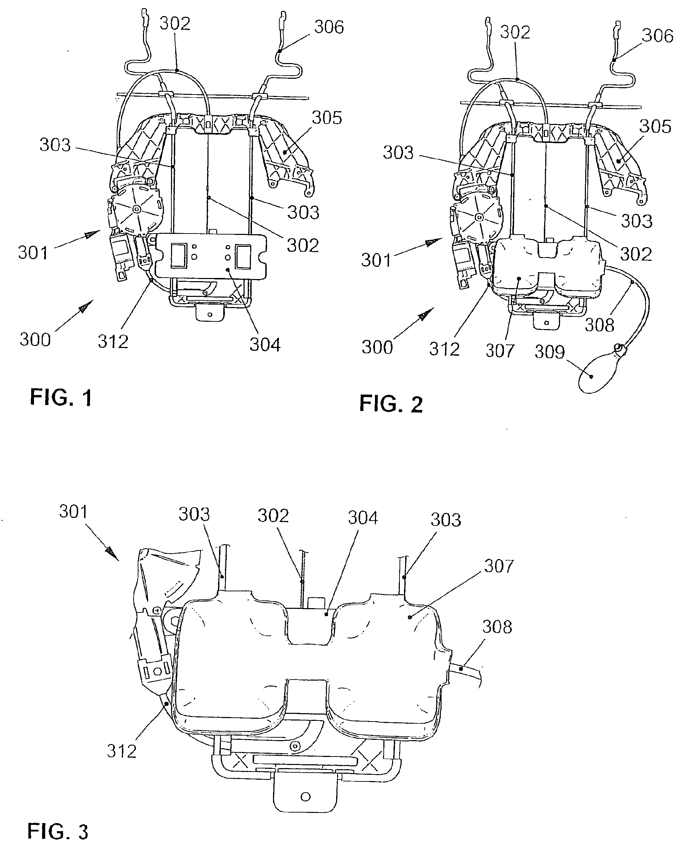

In Figur 1 ist eine Frontansicht einer Verstellvorrichtung 300 gemäß einem Ausführungsbeispiel der Erfindung in einem teilweise zusammengebauten Zustand gezeigt. Die Verstellvorrichtung 300 ist zum Einbau in eine Rückenlehne eines Sitzes, beispielsweise eines Fahrzeugsitzes, ausgelegt. In diesem Zusammenhang bedeutet Frontansicht eine Ansicht von der im eingebauten Zustand einem Sitzinsassen zugewandten Seite her, und Rückansicht bedeutet eine Ansicht von der im eingebauten Zustand einem Sitzinsassen abgewandten Seite her.

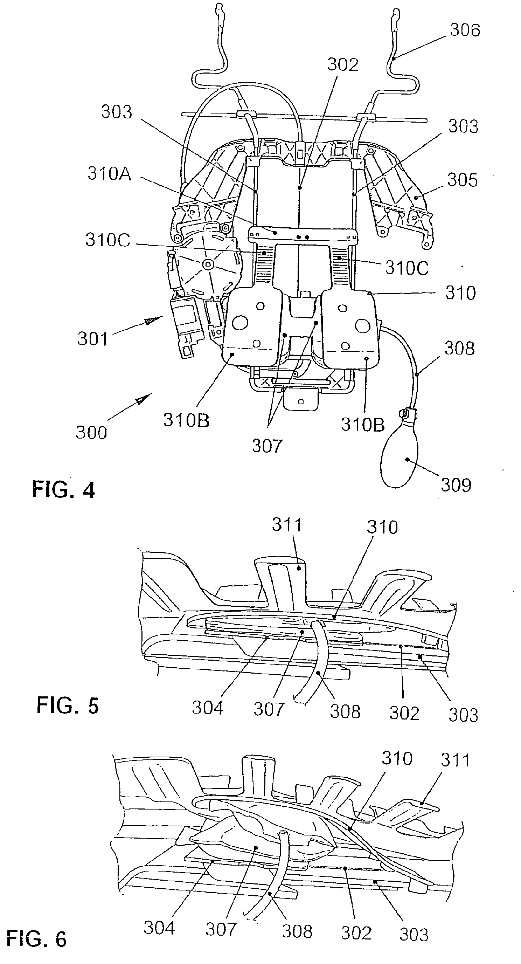

Figuren 2-8 zeigen weitere Ansichten desselben Ausführungsbeispiels, wobei Figur 1 einen ersten teilweisen zusammengebauten Zustand, Figuren 2 und 3 einen zweiten teilweise zusammengebauten Zustand, Figur 4 einen dritten teilweise zusammengebauten Zustand und Figuren 5-8 einen vollständig zusammengebauten Zustand der Verstellvorrichtung 300 zeigen.

In Figur 1 umfasst die teilweise zusammengebaute Verstellvorrichtung 300 eine Rahmenstruktur 305, 306 zum Befestigen der Verstellvorrichtung 300 in einem Sitz, beispielsweise in einer Rückenlehne eines Sitzes, eine an der Rahmenstruktur 305 angebrachte Antriebseinheit 301, zwei Führungsschienen 303 und eine verschiebbar auf den Führunggsschienen 303 gelagerte Platte 304. Die Antriebseinheit 301 ist mit der Platte 304 über zwei Drähte 302, 312 gekoppelt. Indem die Drähte 302, 312, welche beispielsweise Drähte von Bowdenzügen sein können, wechselseitig durch die Antriebseinheit 301 verkürzt und verlängert werden, kann die Platte 304 entlang der Führungsschienen 303 bewegt werden.

Die Rahmenstruktur 305, 306 ist dabei lediglich als Beispiel zu verstehen, und je nach der Struktur eines Sitzes, in welchem die Verstellvorrichtung 300 eingebaut werden soll, kann eine andere Rahmen- oder Befestigungsstruktur zum Befestigen der Verstellvorrichtung in dem Sitz benutzt werden.

In Figur 2 ist die Verstellvorrichtung 300 der Figur 1 in einem zweiten teilweise zusammengebauten Zustand gezeigt. Verglichen mit Figur 1 ist in Figur 2 ein pneumatisches Wölbelement 307 hinzugefügt, welches als Kunststoffgassack ausgebildet ist und an der Platte 304 angebracht ist, so dass die Platte 304 das pneumatische Wölbelement 307 mit den Führungsschienen 303 koppelt. Bei dem Ausführungsbeispiel der Figuren 1 bis 8 umfasst der Gassack des pneumatischen Wölbelements 307 zwei Paare von gestapelten Kammern, wobei die beiden Kammern in einem Stapel jeweils vertikal verbunden sind und die beiden Stapel zudem horizontal wie in den Figuren gezeigt verbunden sind. Andere Formen von Gassäcken, welche auch aus anderen Materialien als Kunststoff geformt sein können, sind ebenso denkbar, beispielsweise ein aus nur einer einzigen Kammer bestehender Gassack oder ein aus mehreren Kammern, welche anders als in den Figuren gezeigt angeordnet sein können, bestehender Gassack.

Um das pneumatische Wölbelement 307 bzw. dessen Gassack aufzublasen. ist bei dem Ausführungsbeispiel der Figuren 1 bis 8 eine manuelle Pumpe 309 vorgesehen, welche mit dem pneumatischen Wölbelement 307 über einen biegsamen Schlauch 308 verbunden ist. Die manuelle Pumpe 309 ist als Ballon ausgestaltet. Die manuelle Pumpe 309 kann ein Ablassventil umfassen, mit welchem nach dem Aufblasen Luft oder ein anderes Gas wieder aus dem pneumatischen Wölbelement 307 herausgelassen werden kann.

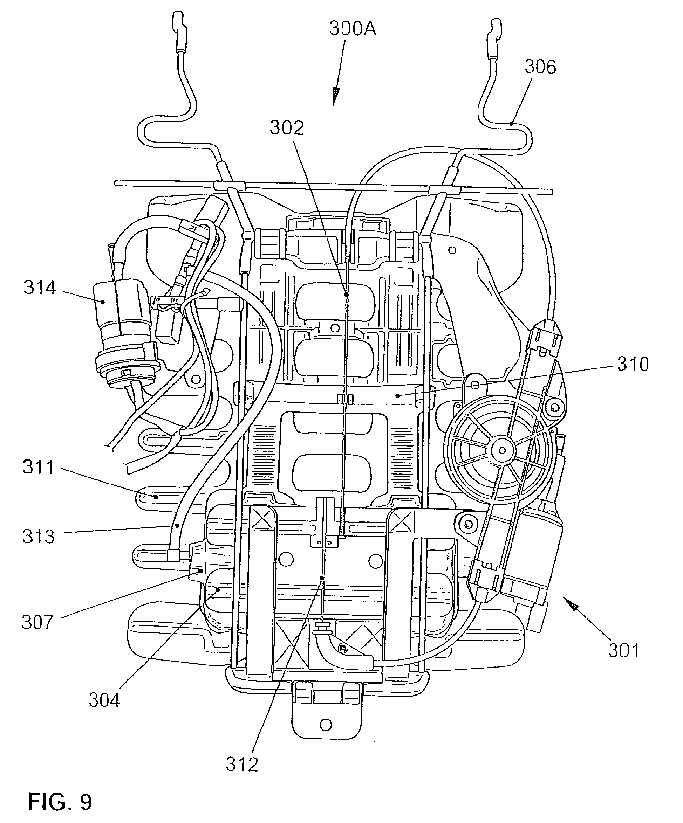

In Figur 3 ist eine vergrößerte Teilansicht der Verstellvorrichtung 300 aus Figur 9 gezeigt, wobei das pneumatische Wölbelement 307 detaillierter zu sehen ist.

In Figur 4 ist die Verstellvorrichtung 300 des Ausführungsbeispiels der Figuren 1 bis 8 in einem dritten teilweise zusammengebauten Zustand dargestellt. Verglichen mit Figuren 2 und 3 wurde eine Abdeckplatte 310 hinzugefügt. Die Abdeckplatte 310 ist bei dem dargestellten Ausführungsbeispiel aus einem flexiblen Kunststoffmaterial gefertigt und deckt das pneumatische Wölbelement 307 zumindest größtenteils ab. Bei dem in Figur 4 gezeigten Ausführungsbeispiel ist die Abdeckplatte 310 mit den Führungsschienen 303 und dem Draht 302 gekoppelt, so dass sie zusammen mit der Platte 304 und dem pneumatischen Wölbelement 307 bewegt wird, wenn die Antriebseinheit 301 aktiviert wird. Wie in Figur 4 gezeigt umfasst die Abdeckplatte 310 einen Querbalken 310A, welcher mit den Führungsschienen 303 und dem Draht 302 gekoppelt ist, wobei die Querstange 310A über flexible Abschnitte 310C mit Abdeckabschnitten 310B gekoppelt ist, wobei die Abdeckungsabschnitte 310B den Gassack des pneumatischen Wölbelements bedecken. Die flexiblen Abschnitte 310C können dabei eine Wellenform aufweisen. Bei dem in Figur 4 gezeigten Ausführungsbeispiel ist die Abdeckplatte 310 einstückig aus Kunststoff, beispielsweise durch Spritzgießen, gefertigt. Die Abdeckplatte 310 kann jedoch auch aus einer Vielzahl von einzelnen Teilen zusammengesetzt sein.

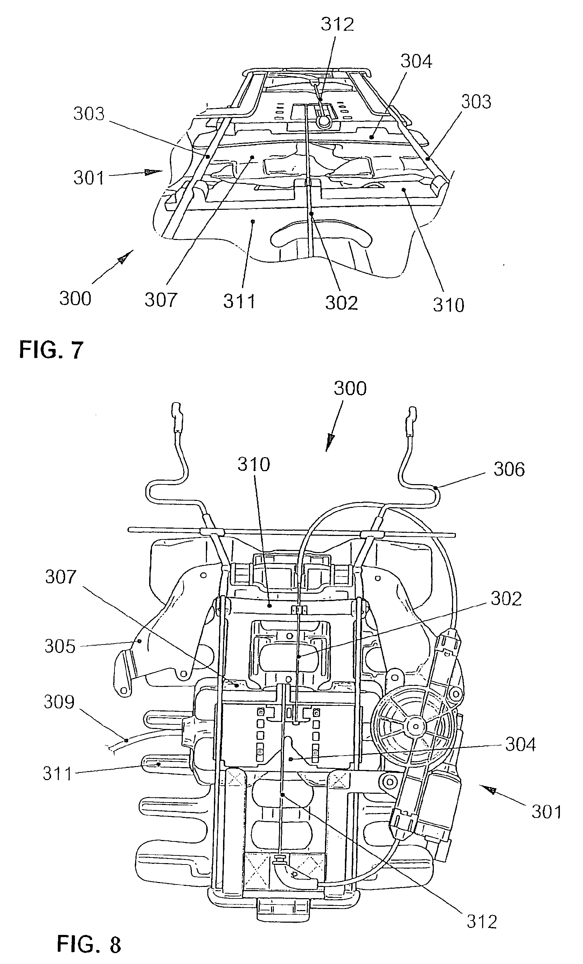

In Figuren 5-8 sind verschiedene Ansichten der Verstellvorrichtung 300 in einem vollständig zusammengebauten Zustand gezeigt. Figur 5 zeigt dabei eine seitliche Teilansicht, wobei das pneumatische Wölbelement 307 nicht aufgeblasen ist, Figur 6 zeigt eine seitliche Teilansicht, wobei das pneumatische Wölbelement 307 aufgeblasen ist, Figur 7 zeigt eine perspektivische Frontansicht und Figur 15 zeigt eine Rückansicht.

Verglichen mit Figur 4 wurde ein wölbbares Element 311 hinzugefügt. Bei dem Ausführungsbeispiel der Figuren 1-8 ist das wölbbare Element 311 ein Element, welche longitudinale und transversale Streben umfasst. Andere Arten von wölbbaren Elementen können jedoch ebenso verwendet werden, beispielsweise plattenförmige Elemente, welche ausgeschnittene Abschnitte aufweisen können, aber ebenso auch durchgehend flächig ausgebildet sein können.

Bei dem dargestellten Ausführungsbeispiel ist das wölbbare Element 311 an der Rahmenstruktur 205 angebracht, und bleibt daher stationär, wenn sich die Platte 304 zusammen mit dem pneumatischen Wölbelement 307 und der Abdeckplatte 310 angetrieben durch die Antriebseinheit 301 bewegt. Da die Abdeckplatte 310 vorgesehen ist, gleiten die beweglichen Teile problemlos entlang der Rückseite des wölbbaren Elements 311.

Wie am besten in Figuren 5 und 6 zu sehen ist, kann durch Aufblasen des pneumatischen Wölbelements 307 eine Krümmung des wölbbaren Elements 311 eingestellt werden. Weiterhin kann durch Bewegen des pneumatischen Wölbelements 307 zusammen mit der Platte 304 und der Abdeckplatte 310 entlang der Führungsschienen 303 eine Position des Scheitels der Wölbung in der Richtung der Führungsschienen 303, das heißt in longitudinaler Richtung des wölbbaren Elements, eingestellt werden.

Der Mechanismus zum Bewegen der Platte 304 zusamment mit dem pneumatischen Wölbelement 307 und der Abdeckplatte 310 entlang der Führungsschienen 303, welcher bereits unter Bezugnahme auf Figur 1 kurz erläutert wurde, ist am besten in Figuren 7 und 8 zu sehen. Die Enden der Drähte 302 und 312 sind auf der Rückseite der Platte 304 verankert, wobei auch eine andere Art der Verankerung als die dargestellte möglich ist. Wie in Figur 8 zu sehen wirkt die Antriebseinheit 301 auf beide Drähte, so dass, wenn die Antriebseineheit 301 betätigt wird, einer der Drähte 302, 312 verkürzt wird, während der andere der Drähte 302, 312 verlängert wird, was beispielsweise durch Aufwickeln bzw. Abwickeln der Drähte 302,312 auf bzw. von einer Trommel oder Spule erfolgen kann. Dies bewegt die Platte 304 in eine gewünschte Richtung. Da weiterhin die Abdeckplatte 310 wie in Figuren 7 und 8 zu sehen an dem Draht 302 befestigt ist, bewegt sich sich die Abdeckplatte 310 zusammen mit der Platte 304 und dem pneumatischen Wölbelement 307.

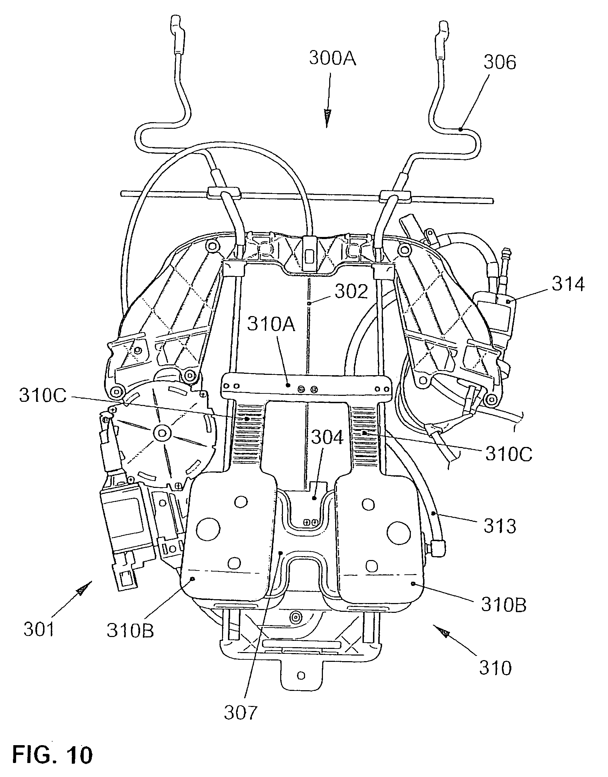

In Figuren 9 und 10 ist ein weiteres Ausführungsbeispiel einer erfindungsgemäßen Verstellvorrichtung 300A gezeigt, welche eine Abwandlung der Verstellvorrichtung 300 der Figuren 1-7 ist. Einander entsprechende Elemente sind mit den gleichen Bezugszeichen gekennzeichnet und werden nicht nochmals beschrieben. Figur 9 zeigt eine Rückansicht der vollständig zusammengebauten Verstellvorrichtung 300A ähnlich der Ansicht von Figur 8, und Figur 10 zeigt eine Frontansicht der Verstellvorrichtung 300A ohne wölbbares Element 311 ähnlich der Ansicht von Figur 4.

Bei dem Ausführungsbeispiel der Figuren 9 und 10 wurde die manuelle Pumpe 309 und der biegsame Schlauch 308 durch eine elektrische Pumpe 314 ersetzt, welche mit dem pneumatischen Wölbelement 307 über einen Schlauch 313 verbunden ist.

Die in Figuren 1 bis 10 gezeigten Ausführungsbeispiele dienen lediglich als Beispiel für die Implementierung der vorliegenden Erfindung, und verschiedene Abwandlungen sind möglich. Beispielsweise kann anstelle der elektrischen Antriebseinheit 301 eine manuelle Antriebseinheit vorgesehen sein. Anstelle der Bewegung der Platte 304 zusammen mit dem pneumatischen Wölbelement 307 und der Abdeckplatte 310 über die Drähte 302, 312 sind andere Mechanismen wie Zahnradmechanismen ebenso möglich. Mehr als zwei Führungsschienen oder auch nur eine einzige Führungsschiene können vorgesehen sein, oder andere Führungselemente wie Führungsdrähte können benutzt werden. Die Verstellvorrichtung kann in ein Sitzelement integriert sein, wobei das wölbbare Element Teil des Sitzelements ist, welches sich flächig beispielsweise im Wesentlichen über die gesamte Rückenlehne des Sitzes erstreckt. Die Anwendung der erfindungsgemäßen Verstellvorrichtung ist nicht auf Rückenlehnen von Fahrzeugsitzen beschränkt, sondern die Verstellvorrichtung kann zur Verstellung beliebiger Flächen, z.B. Sitzflächen, beliebiger Sitztypen, z.B. Bürosstühle, eingesetzt werden.

## Patentansprüche

1. Verstellvorrichtung (300; 300A) für einen Sitz, umfassend:
ein wölbbares Element (311) mit einer ersten in einen eingebauten Zustand einem Insassen des Sitzes zugewandten Seite und einer der ersten Seite gegenüberliegenden zweiten Seite,
ein pneumatisches Wölbelement (307), welches auf der zweiten Seite des wölbbaren Elements (311) angeordnet ist,
zumindest ein Führungselement (303) zum Führen des pneumatischen Wölbelements (307) in einer longitudinalen Richtung des wölbbaren Elements (311), und
ein Kopplungselement (304) zum Koppeln des pneumatischen Wölbelements (307) mit dem Führungselement (303),
**dadurch gekennzeichnet,**
**dass** das wölbbare Element (311) longitudinale und transversale Streben umfasst, und
**dass** das wölbbare Element (311) zur Anbringung an einer Rahmenstruktur (305, 306) ausgestaltet ist, so dass das wölbbare Element (311) stationär bleibt, wenn das pneumatische Wölbelement (307) in der longitudinalen Richtung des wölbbaren Elements (311) bewegt wird.

2. Verstellvorrichtung (300; 300A) nach Anspruch 1,
wobei das wölbbare Element (311) ein Plattenelement umfasst.

3. Verstellvorrichtung (300; 300A) nach Anspruch 1 oder 2,
wobei die Verstellvorrichtung weiterhin ein Abdeckelement (310) umfasst, welches zwischen dem wölbbaren Element (311) und dem pneumatischen Wölbelement (307) angeordnet ist und welches zusammen mit dem pneumatischen Wölbelement (307) in der longitudinalen Richtung des wölbbaren Elements (311) bewegbar ist.

4. Verstellvorrichtung (300; 300A) nach einem der vorhergehenden Ansprüche,
wobei das wölbbare Element (311) ausgestaltet ist, eine flächige Druckverteilung von dem pneumatischen Wölbelement (307) zu dem Insassen weiterzugeben.

5. Verstellvorrichtung (300; 300A) nach einem der vorhergehenden Ansprüche,
wobei das pneumatische Wölbelement einen aufblasbaren Gassack (307) umfasst.

6. Verstellvorrichtung (300; 300A) nach Anspruch 5,
wobei der Gassack (307) mindestens zwei miteinander in Verbindung stehende Kammern umfasst.

7. Verstellvorrichtung (300; 300A) nach Anspruch 6,
wobei die mindestens zwei Kammern zwei Paare von gestapelten Kammern umfassen.

8. Verstellvorrichtung (300; 300A) nach einem der vorhergehenden Ansprüche, weiterhin umfassend eine Pumpe (309, 314) zum Aufblasen des pneumatischen Wölbelements (307).

9. Verstellvorrichtung (300; 300A) nach Anspruch 8,
wobei die Pumpe ausgewählt ist aus der Gruppe bestehend aus einer manuellen Pumpe (309) und einer elektrischen Pumpe (314).

10. Verstellvorrichtung (300; 300A) nach einem der vorhergehenden Ansprüche,
wobei das Kopplungselement eine Platte (304) umfasst, wobei sich das pneumatische Wölbelement (307) an der Platte (304) abstützt.

11. Verstellvorrichtung (300; 300A) nach einem der vorhergehenden Ansprüche,
wobei die Verstellvorrichtung Befestigungselemente (305, 306) zum Anbringen der Verstellvorrichtung (300; 300A) an einem Sitz umfasst.

12. Verstellvorrichtung (300; 300A) nach einem der vorhergehenden Ansprüche,
weiterhin umfassend ein Ventil zum Entlüften des pneumatischen Wölbelements (307).

13. Verstellvorrichtung (300; 300A) nach einem der vorhergehenden Ansprüche,
wobei das mindestens eine Führungselement mindestens zwei Führungsschienen (303) umfasst.

14. Verstellvorrichtung (300; 300A) nach Anspruch 3 und einem der vorhergehenden Ansprüche,
wobei das Abdeckelement (310) ein biegsames Kunststoffelement umfasst.

15. Verstellvorrichtung (300; 300A) nach Anspruch 3 und einem der vorhergehenden Ansprüche,
wobei das Abdeckelement (310) als Abdeckplatte ausgestaltet ist.

16. Verstellvorrichtung (300; 300A) nach einem der vorhergehenden Ansprüche,
weiterhin umfassend eine Antriebseinheit (301) zum Antreiben des pneumatischen Wölbelements (307) in der longitudinalen Richtung des wölbbaren Elements (311).

17. Verstellvorrichtung (300; 300A) nach Anspruch 16,
wobei die Antriebseinheit (301) mit dem Kopplungselement (304) über mindestens einen Draht (302, 312) gekoppelt ist.

18. Sitz, umfassend eine Verstellvorrichtung (300; 300A) nach einem der Ansprüche 1-17.

## Claims

1. Adjusting device (300; 300A) for a seat, comprising:
an archable element (311) having a first side facing an occupant of the seat when installed and a second side opposite the first side,
a pneumatic arching element (307) which is arranged on the second side of the archable element (311),
at least one guide element (303) for guiding the pneumatic arching element (307) in a longitudinal direction of the archable element (311), and
a coupling element (304) for coupling the pneumatic arching element (307) with the guide element (303)
**characterized in that**
the archable element (311) comprises longitudinal and transverse struts, and
the archable element (311) is configured for attachment to a frame structure (305, 306), so that the archable element (311) remains stationary when the pneumatic arching element (307) is moved in the longitudinal direction of the archable element (311).

2. Adjusting device (300; 300A) according to claim 1, wherein the archable element (311) comprises a plate element.

3. Adjusting device (300; 300A) according to claim 1 or claim 2,
wherein the adjusting device further comprises a cover element (310) which is arranged between the archable element (311) and the pneumatic arching element (307) and which is movable in the longitudinal direction of the archable element (311) together with the pneumatic arching element (307).

4. Adjusting device (300; 300A) according to any one of the preceding claims,
wherein the archable element (311) is configured to transfer a surface pressure distribution from the pneumatic arching element (307) to the occupant.

5. Adjusting device (300; 300A) according to any one of the preceding claims,
wherein the pneumatic arching element comprises an inflatable gas back (307).

6. Adjusting device (300; 300A) according to claim 5,
wherein the gas back (307) comprises at least two chambers which are in communication with each other.

7. Adjusting device (300; 300A) according to claim 6,
wherein the at least two chambers comprise at least two pairs of stacked chambers.

8. Adjusting device (300; 300A) according to any one of the preceding claims, further comprising a pump (309, 314) for inflating the pneumatic arching element (307).

9. Adjusting device (300; 300A) according to claim 8,
wherein the pump is selected from a group consisting of a manual pump (309) and an electric pump (314).

10. Adjusting device (300; 300A) according to any one of the preceding claims,
wherein the coupling element comprises a plate (304), the pneumatic arching element (307) being supported at the plate (304).

11. Adjusting device (300; 300A) according to any one of the preceding claims,
wherein the adjusting device comprises fixing elements (305, 306) for attaching the adjusting device (300; 300A) to a seat.

12. Adjusting device (300; 300A) according to any one of the preceding claims,
further comprising a valve for deflating the pneumatic arching element (307).

13. Adjusting device (300; 300A) according to any one of the preceding claims,
wherein the at least one guide element comprises two guide tracks (303).

14. Adjusting device (300; 300A) according to claim 3 and any one of the preceding claims,
wherein the cover element (310) comprises a flexible plastic element.

15. Adjusting device (300; 300A) according to claim 3 and any one of the preceding claims,
wherein the cover element (310) is configured as a cover plate.

16. Adjusting device (300; 300A) according to any one of the preceding claims,
further comprising a drive unit (301) for driving the pneumatic arching element (307) in the longitudinal direction of the archable element (311).

17. Adjusting device (300; 300A) according to claim 16,
wherein the drive unit (301) is coupled to the coupling element (304) through at least one wire (302, 312).

18. Seat comprising an adjusting device (300; 300A) according to any one of claims 1-17.

## Revendications

1. Dispositif de réglage (300 ; 300A) pour un siège, comprenant :
un élément (311) pouvant être bombé pourvu d'un premier côté tourné, dans un état monté, vers un occupant du siège et d'un deuxième côté faisant face au premier côté,
un élément bombé (307) pneumatique, qui est disposé sur le deuxième côté de l'élément (311) pouvant être bombé,
au moins un élément de guidage (303) servant à guider l'élément bombé (307) pneumatique dans une direction longitudinale de l'élément (311) pouvant être bombé, et
un élément de couplage (304) servant à coupler l'élément bombé (307) pneumatique à l'élément de guidage (303),
**caractérisé en ce**
**que** l'élément (311) pouvant être bombé comprend des entretoises longitudinales et transversales, et
en ce que l'élément (311) pouvant être bombé est configuré afin d'être installé au niveau d'une structure de châssis (305, 306) de sorte que l'élément (311) pouvant être bombé reste stationnaire lorsque l'élément bombé (307) pneumatique est déplacé dans la direction longitudinale de l'élément (311) pouvant être bombé.

2. Dispositif de réglage (300 ; 300A) selon la revendication 1,
sachant que l'élément (311) pouvant être bombé comprend un élément formant plaque.

3. Dispositif de réglage (300 ; 300A) selon la revendication 1 ou 2,
sachant que le dispositif de réglage comprend par ailleurs un élément de recouvrement (310), qui est disposé entre l'élément (311) pouvant être bombé et l'élément bombé (307) pneumatique et qui peut être déplacé conjointement avec l'élément bombé (307) pneumatique dans la direction longitudinale de l'élément (311) pouvant être bombé.

4. Dispositif de réglage (300 ; 300A) selon l'une quelconque des revendications précédentes,
sachant que l'élément (311) pouvant être bombé est configuré afin de transmettre une répartition de pression à plat depuis l'élément bombé (307) pneumatique vers l'occupant.

5. Dispositif de réglage (300 ; 300A) selon l'une quelconque des revendications précédentes,
sachant que l'élément bombé pneumatique comprend un coussin gonflable (307) pouvant être gonflé.

6. Dispositif de réglage (300 ; 300A) selon la revendication 5,
sachant que le coussin gonflable (307) comprend au moins deux compartiments reliés l'un à l'autre.

7. Dispositif de réglage (300 ; 300A) selon la revendication 6,
sachant que les deux compartiments ou plus comprennent deux paires de compartiments empilés.

8. Dispositif de réglage (300 ; 300A) selon l'une quelconque des revendications précédentes, comprenant par ailleurs une pompe (309, 314) servant à gonfler l'élément bombé (307) pneumatique.

9. Dispositif de réglage (300 ; 300A) selon la revendication 8,
sachant que la pompe est choisie parmi le groupe constitué d'une pompe manuelle (309) et d'une pompe électrique (314).

10. Dispositif de réglage (300 ; 300A) selon l'une quelconque des revendications précédentes,
sachant que l'élément de couplage comprend une plaque (304), sachant que l'élément bombé (307) pneumatique prend appui au niveau de la plaque (304).

11. Dispositif de réglage (300 ; 300A) selon l'une quelconque des revendications précédentes,
sachant que le dispositif de réglage comprend des éléments de fixation (305, 306) servant à installer le dispositif de réglage (300 ; 300A) au niveau d'un siège.

12. Dispositif de réglage (300 ; 300A) selon l'une quelconque des revendications précédentes,
comprenant par ailleurs une soupape servant à évacuer l'air de l'élément bombé (307) pneumatique.

13. Dispositif de réglage (300 ; 300A) selon l'une quelconque des revendications précédentes,
sachant que l'élément de réglage au moins au nombre de un comprend au moins deux rails de guidage (303).

14. Dispositif de réglage (300 ; 300A) selon la revendication 3 et selon l'une quelconque des revendications précédentes,
sachant que l'élément de recouvrement (310) comprend un élément en plastique flexible.

15. Dispositif de réglage (300 ; 300A) selon la revendication 3 et selon l'une quelconque des revendications précédentes,
sachant que l'élément de recouvrement (310) est configuré sous la forme d'une plaque de recouvrement.

16. Dispositif de réglage (300 ; 300A) selon l'une quelconque des revendications précédentes,
comprenant par ailleurs une unité d'entraînement (301) servant à entraîner l'élément bombé (307) pneumatique dans la direction longitudinale de l'élément (311) pouvant être bombé.

17. Dispositif de réglage (300 ; 300A) selon la revendication 16,
sachant que l'unité d'entraînement (301) est couplée à l'élément de couplage (304) par l'intermédiaire au moins d'un fil métallique (302, 312).

18. Siège comprenant un dispositif de réglage (300 ; 300A) selon l'une quelconque des revendications précédentes 1 à 17.
